# EUROPÄISCHE PATENTSCHRIFT

(11) **EP 3 422 041 B1**
(45) Veröffentlichungstag und Bekanntmachung des Hinweises auf die Patenterteilung: **21.04.2021**
(21) Anmeldenummer: 17178831.8
(22) Anmeldetag: 29.06.2017
(51) Int. Cl.: G01S 7/03, G01S 13/931, G01S 7/02

(54) **GEHÄUSE ZUR AUFNAHME EINES STRAHLFORMENDEN ELEMENTS UND EINES SENSORELEMENTS UND SENSOR**
HOUSING FOR RECEIVING A BEAMFORMING ELEMENT AND A SENSOR ELEMENT AND SENSOR
BOÎTIER DE RÉCEPTION D'UN ÉLÉMENT FORMANT UN FAISCEAU ET ÉLÉMENT DE CAPTEUR ET CAPTEUR

(43) Veröffentlichungstag der Anmeldung: 02.01.2019
(73) Patentinhaber: Baumer Electric AG, 8500 Frauenfeld (CH)
(72) Erfinder: Mauch, Rainer, 78247 Hilzingen (DE); Weigel, Michael, 8555 Müllheim (CH)
(74) Vertreter: Strauss, Steffen

(56) Entgegenhaltungen:
- EP-A1- 1 816 462
- DE-B3-102015 217 546

## Beschreibung

Die Erfindung betrifft ein Gehäuse zur Aufnahme eines strahlformenden Elements, etwa einer Linse, und eines Sensorelements umfassend eine Strahlungsquelle und/oder einen Strahlungsempfänger, insbesondere eine Quelle und/oder einen Empfänger für Radarstrahlung, mit einer Gehäusefläche, die eine Öffnung für das strahlformende Element aufweist, sowie einen Sensor, insbesondere einen Radarsensor mit einem solchen Gehäuse.

Radarsensoren bestehen im Allgemeinen aus einem Sender, einem Empfänger und einer Antenne. Das strahlformende Element kann als Linse ausgebildet sein, die zur Fokussierung der von dem Sensorelement erzeugten Strahlung, insbesondere Radarstrahlung dient. Die Linse kann eine Kunstofflinse sein. Des Weiteren weisen Radarsensoren üblicherweise ein Gehäuse auf, welches die Komponenten zumindest teilweise vor Umwelteinflüssen, beispielsweise Witterung, schützt.

Aus der Druckschrift DE 10 2015 217 546 B3 ist eine Reinigungsvorrichtung zum Reinigen einer transparenten Abdeckung einer Kamera, insbesondere einer Linse der Kamera mit wenigstens einem Reinigungsmittelzulauf und mindestens zwei Reinigungsmittelsprühelementen bekannt.

Die Druckschrift EP 1 816 462 A1 zeigt eine Abwasser-Tauchsonde mit einem flüssigkeitichten Gehäuse mit einem Sensor in dem Gehäuse und einem Sensorfenster an dem Gehäuse. Dem Sensorfenster ist aussenseitig ein Wischer zur aussenseitigen Reinigung des Sensorfensters zugeordnet. Der Wischer wird durch einen in dem Gehäuse angeordneten Antriebsmotor angetrieben. An der Innenseite des Gehäusedeckels ist hierbei in einer Mulde ein Sensor angeordnet, der als Ultraschall-Sensor ausgebildet ist.

Problematisch bei einigen bisherigen Gehäusen ist, dass die strahlformenden Elemente zum Beispiel beim Kontakt mit herumfliegenden Steinen, wie sie im Offroad-Einsatz auftreten, oder schon bei einem versehentlichen Fallenlassen des Sensors beschädigt werden können. Bekannt ist auch, die strahlformenden Elemente durch einen umlaufenden Rahmen zu schützen. Bei solchen Lösungen sammelt sich jedoch Schmutz oder Wasser an, was dazu führen kann, dass keine Messung mehr durchgeführt werden kann.

Aufgabe der Erfindung ist es, eine Lösung bereitzustellen, bei der das Risiko von Beschädigungen gering ist, wobei gleichzeitig vermieden werden soll, dass sich Schmutz oder Wasser ansammeln kann.

Erfindungsgemäß wird dies dadurch gelöst, dass die Gehäusefläche von wenigstens zwei Kragenelementen überragt ist, zwischen denen sich eine Spülöffnung befindet.

Durch die erfindungsgemäße Lösung ist es möglich, das strahlformende Element zu schützen, wobei der sich ansammelnde Dreck durch die Spülöffnung ausgewaschen werden kann oder beispielsweise bei Regen selbsttätig ausgewaschen wird. Darüber hinaus wird verhindert, dass sich Wasser bei ungünstiger Einbaulage ansammeln kann.

Die erfindungsgemäße Lösung kann mit den folgenden, jeweils für sich vorteilhaften und beliebig miteinander kombinierbaren Ausgestaltungen und Weiterentwicklungen weiter verbessert werden.

Eine besonders einfache Herstellung bei einer guten Schutzwirkung ist möglich, wenn die Gehäusefläche polygonal ist und die Kragenelemente an den Ecken angeordnet sind.

Um eine besonders gute Reinigungswirkung zu erzielen, kann zwischen den Ecken jeweils eine Spülöffnung sein. Dadurch ist eine Reinigung oder ein Ausspülen in mehreren Richtungen möglich. Es verhindert auch das Ansammeln von Wasser bei ungünstiger Einbaulage.

In einer vorteilhaften Ausgestaltung weitet sich die Spülöffnung in Richtung weg von der Gehäusefläche. Dadurch kann die Durchspülbarkeit verbessert sein. Zum anderen kann ein solches Gehäuse einfach aus einer Form entnommen werden, wenn es zum Beispiel durch ein Spritzgussverfahren hergestellt wird.

Vorteilhaft für das Entformen aus einer Spritzgussform ist es auch, wenn sich die Kragenelemente von der Gehäusefläche weg verjüngen.

Ein besonderes effizientes Spülen ist möglich, wenn die Spülöffnung bis zur Gehäusefläche reicht. Dies erlaubt das Ausspülen auch kleiner Verschmutzungsteile und verhindert das Ansammeln von Wasser bei ungünstiger Einbaulage.

Die Reinigung kann erleichtert sein, wenn die Spülöffnung entlang der gesamten Höhe der Kragenelemente durchgängig ist.

Die Kragenelemente können einteilig mit dem Gehäuse sein, beispielsweise um eine einfache Herstellbarkeit zu ermöglichen. In einer weiteren Ausgestaltung können die Kragenelemente fest mit dem Gehäuse verbunden sein, beispielsweise um zu verhindern, dass ein Kragenelement verloren geht.

In einer vorteilhaften Ausgestaltung kann mindestens ein Kragenelement vom Rest des Gehäuses wiederholt zerstörungsfrei lösbar und mit diesem verbindbar sein. Es kann zum Beispiel durch Klicken oder Rasten an dem Gehäuse angebracht werden. Je nach Bedarf kann dann ein Kragenelement angebracht werden oder nicht. Besonders vorteilhaft ist es, wenn verschiedene Kragenelemente vorhanden sind, die sich zum Beispiel in Form, Breite und/oder Höhe unterscheiden und zum Beispiel an verschiedene strahlformende Elemente angepasst sind. So kann dann nach Bedarf eines der Kragenelemente passend zum strahlformenden Element angebracht werden.

In einer weiteren vorteilhaften Ausgestaltung kann mindestens ein Kragenelement höhenverstellbar sein, um beispielsweise eine Anpassung an verschiedene strahlformende Elemente oder verschiedene Umgebungen zu ermöglichen.

In einer anderen vorteilhaften Ausgestaltung kann mindestens ein Kragenelement in einer Umfangsrichtung oder in einer vom strahlformenden Element weg weisenden Radialrichtung verstellbar sein, um zum Beispiel an verschiedene Anforderungen bezüglich der Größe der Spülöffnung anpassbar zu sein.

Ein Sensor kann ein erfindungsgemäßes Gehäuse und ein strahlformendes Element umfassen, um eine Messung durchzuführen. Der Sensor kann ein Sensorelement mit einer Strahlungsquelle und/oder einem Strahlungsempfänger zum Aussenden und/oder Empfangen von Strahlung aufweisen. Erfindungsgemäß handelt es sich um Radarstrahlung. Das strahlformende Element kann eine Linse aufweisen oder eine Linse sein. Das strahlformende Element kann insbesondere zur Formung eines Messvolumens ausgestaltet sein. Das Messvolumen kann länglich sein und sich vom Gehäuse weg erstrecken.

Erfindungsgemäss ragt das strahlformende Element aus der Gehäusefläche, wobei das strahlformende Element von den Kragenelementen überragt ist. Dadurch ist das strahlformende Element geschützt.

Vorzugsweise überragen die Kragenelemente das strahlformende Element um einen bestimmten Sicherheitsabstand, um auch noch Schutz zu gewähren, wenn beispielsweise die Kragenelemente elastisch verformt werden. Der Sicherheitsabstand kann ein fest definierter Abstand, wie ein paar Millimeter, etwa 5 Millimeter, sein, oder ein bestimmter Prozentsatz der Höhe der Kragenelemente, beispielsweise 10 % oder 20 % der Höhe.

Vorteilhafterweise beeinflussen die Kragenelemente nicht die Sende- und Empfangscharakteristik des Sensors. Die Kragenelemente dienen also nicht zur Formung der Abstrahlcharakteristik der von der Radarstrahlungsquelle ausgesandten Wellen und der Empfangscharakteristik des Sensors, sondern lediglich zum Schutz des strahlformenden Elementes.

Dazu können die Kragenelemente eine Apertur formen, die mindestens eine Größe aufweist, die 90 %, vorzugsweise 95 %, insbesondere 99 % der Strahlung, die aus der Strahlungsquelle austritt, passieren lässt. Ist die Ausbreitung der Strahlung beispielsweise durch Beugung begrenzt, so kann die Apertur eine Größe aufweisen, die ein Passieren von Strahlung der nullten und/oder ersten Ordnung zulässt. Die Größe kann insbesondere eine Funktion der Wellenlänge und/oder des Abstandes der Apertur vom strahlformenden Element sein. Ein durch das strahlformende Element definierter Abstrahlwinkel kann relevant für die minimale Größe der Apertur sein.

Die Spülöffnung kann dazu ausgestaltet sein, zumindest seitlich vor Objekten wie Kugeln mit einem bestimmten Mindestdurchmesser zu schützen. Größere Objekte können dann nicht zum strahlformenden Element vordringen und dieses schädigen. Ein solcher Mindestdurchmesser kann in einem gesetzlichen oder betrieblichen Standard festgeschrieben sein. Ein möglicher Mindestdurchmesser kann etwa 20 Millimeter betragen.

Um sicherzustellen, dass Verschmutzungen effizient ausgewaschen werden, oder sich kein Wasser bei ungünstiger Einbaulage ansammelt, kann die Spülöffnung dazu ausgestaltet sein, Partikel mit einem bestimmten Mindestdurchmesser, abfließen lassen zu können. Ein solcher Mindestdurchmesser kann in einem gesetzlichen oder betrieblichen Standard festgeschrieben sein.

Dies hat den Vorteil, dass bei Einsatz des Sensors mit dem erfindungsgemässen Gehäuse im landtechnischen Umfeld eine Reinigung von Verschmutzungen, welche beispielsweise von Boden- oder Pflanzenmaterial resultieren, vereinfacht ist.

Das strahlformende Element kann austauschbar, verstellbar und/oder justierbar sein, um eine Anpassung an verschiedene Anforderungen zu ermöglichen. Die Verstellung oder Justierung kann beispielsweise durch Drehung oder Verschiebung möglich sein, wobei die Drehung oder Verschiebung manuell oder maschinell durchgeführt werden kann. Dies hat den Vorteil, dass eine Beeinflussung der Sende- und Empfangscharakteristik des Sensors einfach möglich ist. Damit lässt sich ein Erkennungsbereich von Objekten, beispielsweise mittels Radarstrahlung durch Veränderung eines Öffnungswinkels des Messvolumens des Radarsensors einstellen.

Durch direktes oder indirektes Messen des Abstandes des strahlformenden Elements vom Sensorelement kann darüber hinaus der aktuelle Öffnungswinkel des Messvolumens bestimmt werden. Eine direkte Messung könnte bspw. das vom Sensorelement erzeugte Strahlung erfolgen. Dabei wird die Reflexion der Strahlung an der ersten und/oder zweiten Grenzfläche des strahlformenden Elements im Sensorelement ausgewertet. Bei einer indirekten Messung kann ein unabhängiges Distanzmesssystem eingeführt werden, bspw. ein optisches Triangulationsmesssystem, eine magnetische oder eine kapazitive Positionsermittlung. Bei einer maschinellen Verstellung im Fertigungsprozess könnte dies auch als Stellgrösse dienen. Des Weiteren ist eine Einstellung im Betrieb durch einen Stellantrieb erfolgen, der als Regelgrösse den Öffnungswinkel hat.

Dies ermöglicht eine besonders einfache Variantenbildung im Fertigungsprozess (in Bezug auf das Merkmal Öffnungswinkel). Darüber hinaus kann im Betrieb ein für die Anwendung optimaler Öffnungswinkel vom Bediener oder der internen Signalverarbeitung gesetzt und/oder ermittelt werden.

Die Kragenelemente können für die Benutzung mit einem vordefinierten Satz von Linsen nutzbar sein. Beispielsweise können Sie eine Höhe aufweisen, die die längste Linse immer noch überragt.

In einer alternativen Ausgestaltung können die Kragenelemente austauschbar sein, wobei in einem Satz von Kragenelementen verschiedene Kragenelemente vorhanden sind, die mit jeweils mindestens einer Linse nutzbar sind.

Die Gehäusefläche kann eben ausgestaltet sein um ein einfaches Abfließen von flüssigen Medien, insbesondere Wasser zu ermöglichen. In einer anderen Ausgestaltung kann die Gehäusefläche konvex ausgestaltet sein, um das Abfließen zu unterstützen.

Vorzugsweise sind mindestens drei Kragenelemente vorhanden. Dadurch wird ein guter Schutzeffekt erzielt.

Die Kragenelemente können an sich gegenüberliegenden Seiten des strahlformenden Elementes angeordnet sein, um einen guten Schutz zu bieten. Das strahlformende Element kann zwischen den Kragenelementen angeordnet sein.

Von der Gehäusefläche vorstehende Teile des strahlformenden Elements können in einem von den Kragenelementen begrenzten Volumen angeordnet sein, um einen allseitigen Schutz zu ermöglichen. Das Volumen kann dabei durch Flächen, die geradlinig von einem Kragenelement zum anderen verlaufen, begrenzt sein.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie dies im Anwendungsfall notwendig ist.

Es zeigen:
- Fig. 1: eine schematische Perspektivansicht einer ersten Ausführungsform;
- Fig. 2: eine Aufsicht auf die erste Ausführungsform aus Fig. 1;
- Fig. 3: eine Frontalansicht der ersten Ausführungsform aus Fig. 1;
- Fig. 4: eine Seitenansicht der ersten Ausführungsform aus Fig. 1;
- Fig. 5: eine schematische Schnittansicht durch eine weitere Ausführungsform;
- Fig. 6: eine schematische Darstellung der Intensität einer von einer Linse geformten Strahlung in Abhängigkeit vom Winkel; und
- Fig. 7: eine schematische Darstellung der akkumulierten Intensität einer von einer Linse geformten Strahlung in Abhängigkeit vom Winkel.

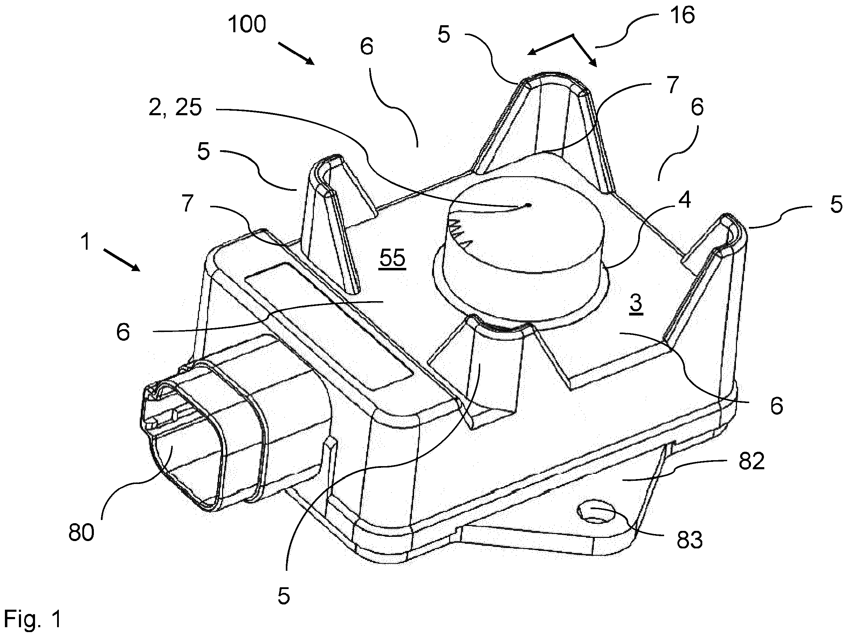

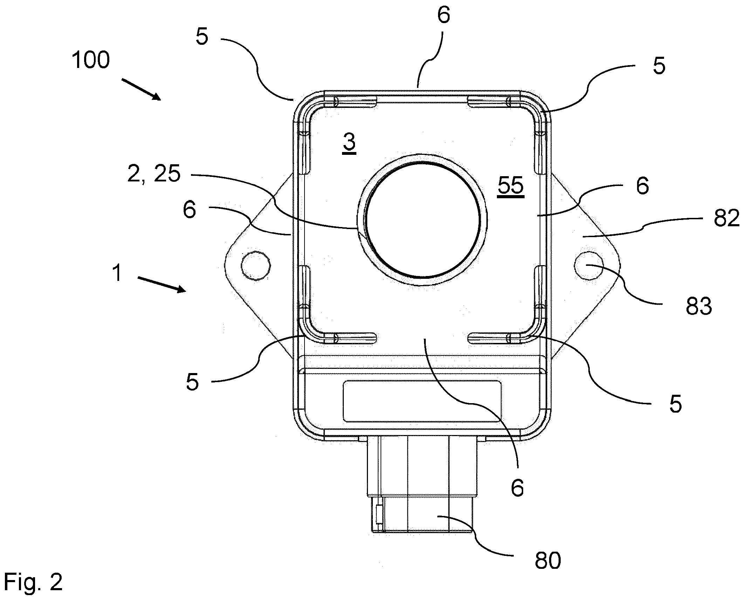

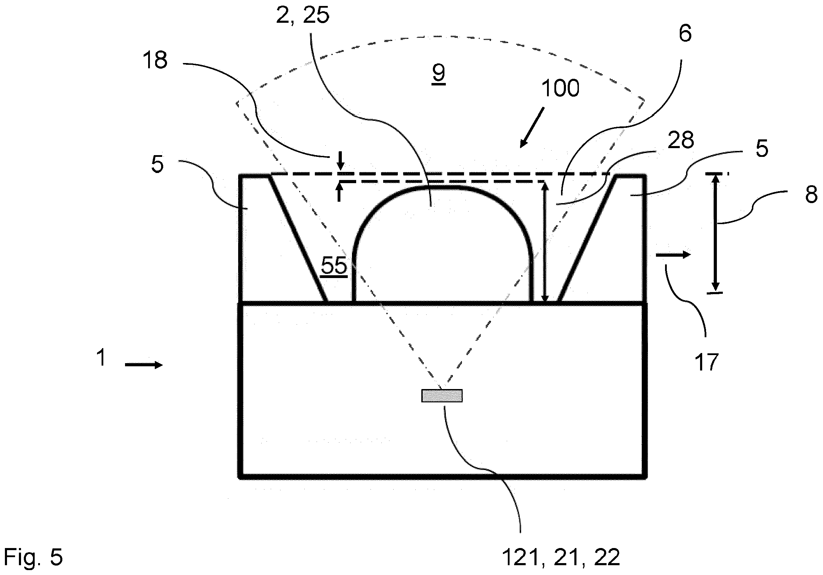

In den Figuren 1 bis 4 ist eine erste Ausführungsform eines Gehäuses 1 eines Sensors 100 gezeigt. Ein strahlformendes Element 2, das über einer Strahlungsquelle 21 und/oder einem Strahlungsempfänger 22 (dargestellt in Figur 5), die Teile eines Sensorelementes 121 sind, angeordnet ist, ist in diesem Fall eine Linse 25, die durch eine Öffnung 4 in einer Gehäusefläche 3 des Gehäuses 1 ragt.

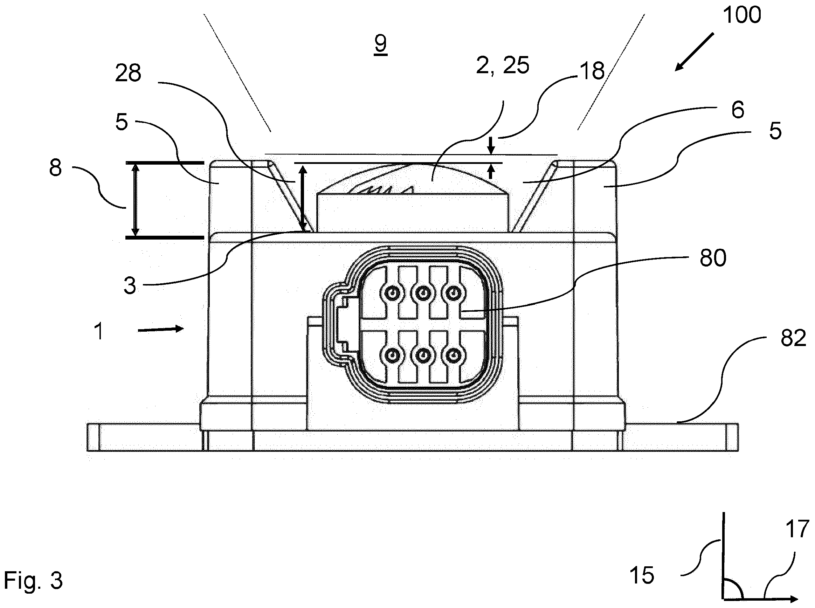

Um das strahlformende Element 2 zu schützen, ragen Kragenelemente 5 von der Gehäusefläche 3 hervor. Sie überragen das strahlformende Element 2 um einen Sicherheitsabstand 18 (dargestellt in der Figur 3), der in diesem Fall relativ klein ist. Die Höhe 8 der Kragenelemente 5, die entlang einer von der Gehäusefläche 3 weg weisenden Höhenrichtung 15 gemessen ist, ist größer als die entsprechende Höhe 28 des strahlformenden Elementes 2 bzw. des Überstandes des strahlformenden Elements 2 aus der Gehäusefläche 3. Zwischen den Kragenelementen 5 befindet sich jeweils eine Spülöffnung 6, durch die anfallender Dreck abgeführt oder ausgespült werden kann.

Die Gehäusefläche 3 ist polygonal, in diesem Fall viereckig, wobei die Kragenelemente 5 an den Ecken 7 des Vierecks angeordnet sind. Die Kragenelemente 5 bieten daher einen guten Schutz nach außen.

Das Gehäuse 1 weist ferner Befestigungselemente 82 mit Löchern 83 zur Befestigung des Gehäuses 1 an weiteren Elementen auf.

In einem Anschlussbereich 80 ist ein elektrischer Anschluss zum Beispiel an eine Signalverarbeitung möglich.

Die Gehäusefläche 3 ist eben ausgestaltet, kann in einer alternativen Ausgestaltung jedoch auch zum Beispiel konvex ausgestaltet sein um ein einfaches Abfließen von Flüssigkeiten oder anderen Medien zu ermöglichen.

Die Spülöffnungen 6 reichen jeweils bis zur Gehäusefläche 3, sodass auch kleine Teilchen vollständig ausgespült werden können.

In der Höhenrichtung 15 (dargestellt in der Figur 3, die weg von der Gehäusefläche 3 weist, weiten sich die Spülöffnungen 6 jeweils auf. Dadurch kann das Gehäuse 1, das in einem Spritzgussschritt hergestellt werden kann, leicht entformt werden. Ferner hat diese Ausgestaltung den Vorteil, dass ein sich nach oben hin, d.h. von der Gehäusefläche 3 weg in der Höhenrichtung 15 kegelförmig oder trichterförmig erweiterndes Messvolumen 9 nicht beeinträchtigt wird.

Die Kragenelemente 5 sind in einer vom strahlformenden Element 2 weg weisenden Radialrichtung 17, die senkrecht zur Höhenrichtung 15 verläuft, vom strahlformenden Element 2 beabstandet, um das Messvolumen 9 nicht zu beeinträchtigen. Das Messvolumen 9 ergibt sich aus der Abstrahlcharakteristik des Sensorelementes 121 und der strahlformenden Wirkung des strahlformenden Elementes 2. Die Kragenelemente 5 dienen also insbesondere nicht zur Beeinflussung der Sende- und Empfangscharakteristik des Sensors sondern lediglich zum Schutz des strahlformenden Elementes 2.

In der gezeigten Ausgestaltung sind die Kragenelemente 5 einteilig mit dem Rest des Gehäuses 1 ausgebildet. In alternativen Ausgestaltungen können die Kragenelemente 5 auch vom Rest des Gehäuses 1 abtrennbar sein, insbesondere ohne dass dabei die Kragenelemente 5 oder das Gehäuse 1 zerstört werden. Dadurch ist es zum Beispiel möglich, verschiedene Kragenelemente 5 zu verwenden, die sich zum Beispiel bezüglich einer Höhe 8 in der Höhenrichtung 15 oder einer Breite in einer Umfangsrichtung 16 um das strahlformende Element 2 herum unterscheiden.

Ebenso können alternativ ausgestaltete Kragenelemente 5 höhenverstellbar sein, etwa um eine Anpassung an verschieden hohe strahlformende Elemente 2 zu ermöglichen.

Das strahlformende Element 2 befindet sich innerhalb eines Volumens 55, das durch die Kragenelemente 5 und zwischen den Kragenelementen 5 geradlinig verlaufende Flächen begrenzt ist. Das strahlformende Element 2 ist dadurch allseitig geschützt.

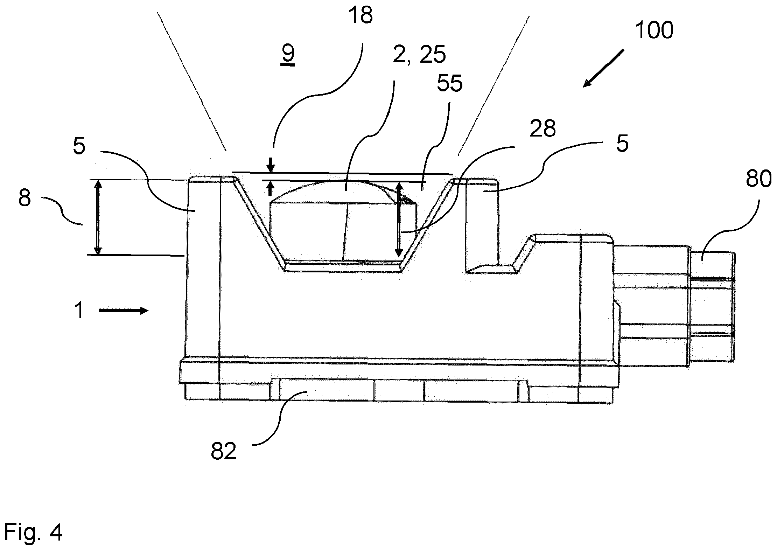

Insbesondere in den Figuren 1 und 4 ist zu erkennen, dass ein Kreis mit einem bestimmten Mindestdurchmesser in die Spülöffnung 6 einschreibbar ist, um zu garantieren, dass Partikel einer bestimmten Größe ausgespült werden können.

Das strahlformende Element 2 kann austauschbar sein, um bestimmte Formen von Messvolumina 9 zu erzeugen. Ferner kann das strahlformende Element 2 justierbar und/oder verstellbar sein, beispielsweise kann es durch eine schraubenförmige Drehung in das Gehäuse hinein oder aus dem Gehäuse hinaus geschraubt werden, um so zum Beispiel verschiedene Messvolumina 9 zu erzeugen.

In Fig. 5 ist eine weitere Ausgestaltung gezeigt. Ein Sensorelement 121 umfasst eine Strahlungsquelle 21 und einen Strahlungsempfänger 22 und erzeugt zusammen mit dem strahlformenden Element 2 in Form der Linse 25 ein Messvolumen 9. Auch hier liegt das Messvolumen 9 innerhalb der Apertur, die von den Kragenelementen 5 gebildet wird.

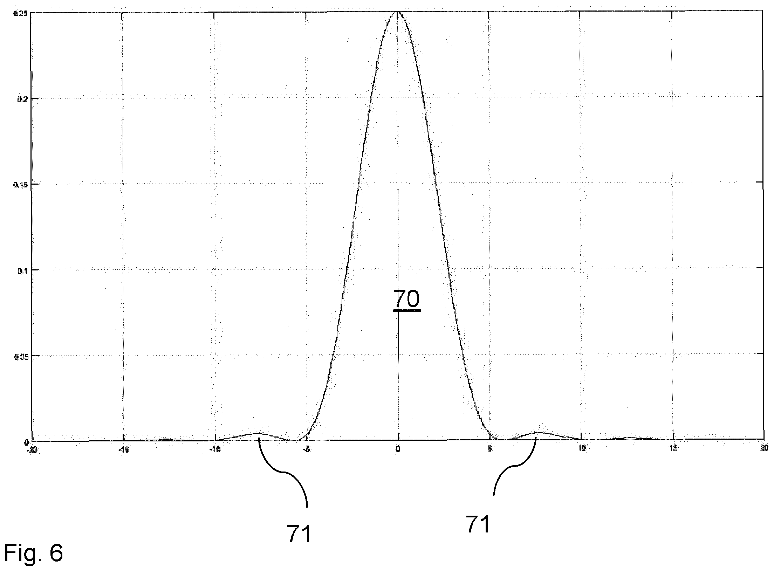

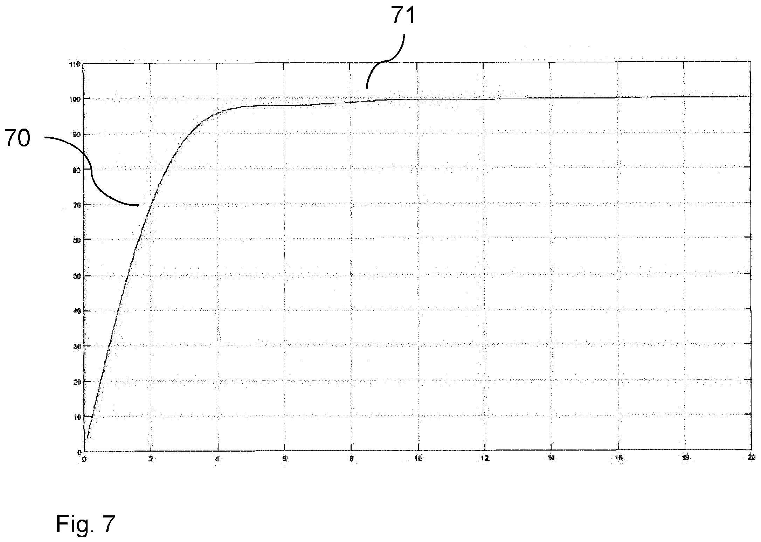

Die Form des Messvolumens 9 wird unter anderem von der Beugung der Strahlung beeinflusst, die zur Messung verwendet wird. In den Figuren 6 und 7 sind Diagramme gezeigt, die die Intensität bzw. die aufsummierte Intensität einer Strahlung schematisch bezüglich eines Winkels zeigen. Die Hauptintensität befindet sich in der nullten Ordnung, sodass eine Apertur zumindest diese nullte Ordnung passieren lassen sollte. Idealerweise lässt sie auch die erste Ordnung 71 der Strahlung passieren, sodass annähernd 100 Prozent der Strahlung zur Messung verwendet werden können.

Als Messvolumen 9 kann ein Volumen angesehen werden, in dem sich mindestens 90 %, vorzugsweise 95 %, speziell 99 % der Intensität der Strahlung befinden.

## Patentansprüche

1. Sensorgehäuse (1) mit einem strahlformenden Element (2) sowie einem Sensorelement (121), umfassend eine Strahlungsquelle (21) und/oder einen Strahlungsempfänger (22), und mit einer Gehäusefläche (3), die eine Öffnung (4) für das strahlformende Element (2) aufweist, **dadurch gekennzeichnet, dass** das strahlformende Element (2) als eine Linse (25) zur Strahlformung von Radarstrahlung ausgeführt ist, wobei die Linse (25) aus der Gehäusefläche (3) ragt und die Gehäusefläche (3) und die Linse (25) zum Schutz der Linse (25) von wenigstens zwei Kragenelementen (5) überragt ist, wobei sich zwischen den beiden Kragenelementen(5) eine Spülöffnung (6) befindet.

2. Sensorgehäuse (1) nach Anspruch 1, wobei die Gehäusefläche (3) polygonal ist und die Kragenelemente (5) an den Ecken (7) angeordnet sind.

3. Sensorgehäuse (1) nach Anspruch 2, wobei zwischen den Ecken (7) jeweils eine Spülöffnung (6) ist, durch die sich ansammelnder Dreck ausgewaschen werden kann und/oder bei Regen selbsttätig ausgewaschen wird und/oder verhindert wird, dass sich Wasser bei ungünstiger Einbaulage ansammeln kann.

4. Sensorgehäuse (1) nach einem der Ansprüche 1 bis 3, wobei sich die Spülöffnung (6) in Richtung weg von der Gehäusefläche (3) weitet.

5. Sensorgehäuse (1) nach einem der Ansprüche 1 bis 4, wobei die Spülöffnung (6) bis zur Gehäusefläche (3) reicht.

6. Sensorgehäuse (1) nach einem der Ansprüche 1 bis 5, wobei die Spülöffnung (6) entlang der gesamten Höhe (8) der Kragenelemente (5) durchgängig ist.

7. Sensorgehäuse (1) nach einem der Ansprüche 1 bis 6, wobei mindestens ein Kragenelement (5) vom Rest des Gehäuses (1) wiederholt zerstörungsfrei lösbar und mit diesem verbindbar ist.

8. Sensorgehäuse (1) nach einem der Ansprüche 1 bis 7, wobei mindestens ein Kragenelement (5) höhenverstellbar ist.

9. Sensorgehäuse (1) nach einem der Ansprüche 1 bis 8, wobei das strahlformende Element (2) austauschbar ausgeführt ist.

10. Sensorgehäuse (1) nach einem der Ansprüche 1 bis 9, wobei das strahlformende Element (2) zur Einstellung der Sende-und Empfangscharakteristik eines Sensors (100) verstellbar und/oder justierbar ausgeführt ist.

11. Sensorgehäuse (1) nach Anspruch 10, wobei eine Verstellung oder Justierung durch Drehung oder Verschiebung erfolgt.

12. Sensorgehäuse (1) nach Anspruch 11, wobei die Drehung oder die Verschiebung manuell oder maschinell durchführbar ist.

13. Sensorgehäuse (1) nach einem der Ansprüche 1 bis 12, wobei die Kragenelemente (5) ein Messvolumen (9) des strahlformenden Elements (2) unbeeinträchtigt lassen.

14. Radarsensor (100) mit einem Sensorgehäuse (1) nach einem der Ansprüche 1 bis 13 für den Einsatz im landtechnischen Umfeld.

## Claims

1. Sensor housing (1) with a beamforming element (2) as well as a sensor element (121), comprising a radiation source (21) and/or a radiation receiver (22), and with a housing surface (3) having an opening (4) for the beamforming element (2), **characterized in that**
the beamforming element (2) is executed as a lens (25) for beamforming radar radiation, wherein the lens (25) protrudes from the housing surface (3), and the housing surface (3) and the lens (25) are overtopped by at least two collar elements (5) for the protection of the lens (25), wherein a rinsing opening (6) is arranged between the two collar elements (5).

2. Sensor housing (1) according to Claim 1, wherein the housing surface (3) is polygonal and the collar elements (5) are arranged at the corners (7).

3. Sensor housing (1) according to Claim 2, wherein one rinsing opening (6) each is provided between the corners (7) by means of which accumulating dirt can be washed out and/or is automatically washed out in the rain, and/or by means of which it will be prevented that water accumulates in case of unfavorable installation conditions.

4. Sensor housing (1) according to one of the Claims 1 to 3, wherein the rinsing opening (6) widens while facing away from the housing surface (3).

5. Sensor housing (1) according to one of the Claims 1 to 4, wherein the rinsing opening (6) reaches up to the housing surface (3).

6. Sensor housing (1) according to one of the Claims 1 to 5, wherein the rinsing opening (6) is continuous along the entire height (8) of the collar elements (5).

7. Sensor housing (1) according to one of the Claims 1 to 6, wherein at least one collar element (5) is non-destructively repeatedly detachable from the remainder of the housing (1) and connectable with it.

8. Sensor housing (1) according to one of the Claims 1 to 7, wherein at least one collar element (5) is height-adjustable.

9. Sensor housing (1) according to one of the Claims 1 to 8, wherein the beamforming element (2) is interchangeably executed.

10. Sensor housing (1) according to one of the Claims 1 to 9, wherein the beamforming element (2) is adjustably and/or adaptably executed for setting the sending and receiving characteristic of a sensor (100).

11. Sensor housing (1) according to Claim 10, wherein an adjustment or adaptation is effected by turning or moving.

12. Sensor housing (1) according to Claim 11, wherein turning or moving is manually or mechanically executable.

13. Sensor housing (1) according to one of the Claims 1 to 12, wherein the collar elements (5) leave a measuring volume (9) of the beamforming element (2) unaffected.

14. Radar sensor (100) with a sensor housing (1) according to one of the Claims 1 to 13 for the application in an agricultural environment.

## Revendications

1. Boîtier de détecteur (1) doté d'un élément de formation de faisceau (2) et d'un élément détecteur (121), comprenant une source de rayonnement (21) et/ou un récepteur (22), et doté d'une surface de boîtier (3), qui présente une ouverture (4) pour l'élément de formation de faisceau (2), **caractérisé en ce que**
l'élément de formation de faisceau (2) se présente sous la forme d'une lentille (25) pour la formation du faisceau du rayonnement radar, la lentille (25) faisant saillie de la surface de boîtier (3) et la surface de boîtier (3) et la lentille (25) dépassant pour protéger la lentille (25) d'au moins deux éléments collets (5), une ouverture de bobine (6) se trouvant entre les deux éléments collets (5).

2. Boîtier de détecteur (1) selon la revendication 1, la surface de boîtier (3) étant de forme polygonale et les éléments collets (5) étant disposés sur les angles (7).

3. Boîtier de détecteur (1) selon la revendication 2, une ouverture de bobine (6) étant prévue entre les angles (7), à travers laquelle la saleté accumulée peut être nettoyée et/ou être automatiquement nettoyée en cas de pluie et/ou à travers laquelle l'accumulation d'eau en cas de position de montage soit empêchée.

4. Boîtier de détecteur (1) selon l'une des revendications 1 à 3, l'ouverture de bobine (6) s'élargissant dans la direction opposée à la surface de boîtier (3).

5. Boîtier de détecteur (1) selon l'une des revendications 1 à 4, l'ouverture de bobine (6) s'étendant jusqu'à la surface de boîtier (3).

6. Boîtier de détecteur (1) selon l'une des revendications 1 à 5, l'ouverture de bobine (6) étant constamment le long de toute la hauteur (8) des éléments collets (5).

7. Boîtier de détecteur (1) selon l'une des revendications 1 à 6, au moins un élément collet (5) étant facilement détachable à plusieurs reprises du reste du boîtier (1) et pouvant être raccordé à celui-ci.

8. Boîtier de détecteur (1) selon l'une des revendications 1 à 7, au moins un élément collet (5) étant réglable en hauteur.

9. Boîtier de détecteur (1) selon l'une des revendications 1 à 8, l'élément de formation de faisceau (2) étant remplaçable.

10. Boîtier de détecteur (1) selon l'une des revendications 1 à 9, l'élément de formation de faisceau (2) étant conçu de manière réglable et/ou ajustable pour le réglage de la caractéristique d'émission et de réception d'un détecteur (100).

11. Boîtier de détecteur (1) selon la revendication 10, un réglage ou un ajustage étant effectué par rotation ou déplacement.

12. Boîtier de détecteur (1) selon la revendication 11, la rotation ou le déplacement pouvant être effectué(e) manuellement ou mécaniquement.

13. Boîtier de détecteur (1) selon l'une des revendications 1 à 12, les éléments collets (5) laissant intact un volume de mesure (9) de l'élément de formation de faisceau (2).

14. Détecteur radar (100) doté d'un boîtier de détecteur (1) selon l'une des revendications 1 à 13 destiné à être utilisé dans le domaine du génie agricole.
